# EUROPÄISCHE PATENTSCHRIFT

(11) **EP 3 605 832 B1**
(45) Veröffentlichungstag und Bekanntmachung des Hinweises auf die Patenterteilung: **21.04.2021**
(21) Anmeldenummer: 19189028.4
(22) Anmeldetag: 30.07.2019
(51) Int. Cl.: H02P 8/30, H02P 3/02, H02P 6/24

(54) **ADAPTIVE HALTEBESTROMUNG FÜR ELEKTRISCH KOMMUTIERTE ELEKTROMOTOREN**
ADAPTIVE HOLDING CURRENT FOR ELECTRICALLY COMMUTATED ELECTRIC MOTORS
COURANT DE MAINTIEN ADAPTATIF POUR MOTEURS ÉLECTRIQUES À COMMUTATION ÉLECTRIQUE

(30) Priorität: 02.08.2018 DE 102018118783
(43) Veröffentlichungstag der Anmeldung: 05.02.2020
(73) Patentinhaber: Elmos Semiconductor SE, 44227 Dortmund (DE)
(72) Erfinder: Hartzsch, Jörg, 44287 Dortmund (DE)
(74) Vertreter: dompatent von Kreisler Selting Werner - Partnerschaft von Patent- und Rechtsanwälten mbB

(56) Entgegenhaltungen:
- EP-A1- 2 621 078
- DE-A1- 10 338 996
- DE-A1-102011 050 101

## Beschreibung

Die Erfindung betrifft ein Verfahren und eine Vorrichtung zur Erzeugung eines Haltemoments im Stillstandzustand eines mindestens zwei Wicklungen aufweisenden, elektrisch kommutierten Elektromotors, auf den im Stillstandzustand von außen ein ggf. variierendes Lastmoment wirkt, das einen vorgegebenen Maximalwert nicht überschreitet. Insbesondere betrifft die Erfindung die Erzeugung eines Haltemoments im Stillstandzustand eines sensorlosen Elektromotors und insbesondere eines sensorlosen Stepper-Motors.

Die Kundenanforderungen an elektrische Stellantriebe spezifizieren neben einem Drehmoment im Normal- bzw. Verfahrbetrieb häufig auch ein Haltemoment, bis zu dem der Stellantrieb im Stillstandzustand bei von außen wirkenden Lastmomenten stillstehen bleiben muss. Bei elektrisch kommutierten Elektromotoren mit Sensoren für die elektrische Kommutierung wie beispielsweise Potentiometern, Hall-Sensoren oder bei kostenintensiveren BLDC-Motorsystemen mit speziellen Verfahren wie z.B. "Virtu-Hall" existieren Lösungsansätze für die Anforderung des Stillstehens bis zu einem vorgegebenen Haltemoment. Allen aktuell auf dem Markt befindlichen Lösungen ist dabei gemein, dass sie recht aufwendig sind und daher aus kommerziellen Gründen für kleinere kostengünstig zur Verfügung stehende Stellantriebe weniger geeignet sind.

Bei elektrisch kommutierten Elektromotoren, deren Kommutierung ohne Verwendung von Sensoren, also sensorlos erfolgt, wird die Anforderung an das Haltemoment üblicherweise durch eine konstante Haltebestromung im Stillstandzustand des Stellantriebs erreicht, wodurch kontinuierlich elektrische Energie benötigt wird, auch wenn mechanisch kein oder nur ein geringes Haltemoment erforderlich wäre, um den Stillstandzustand beizubehalten.

Aus US 2013/0193889 A1 ist ein Verfahren zur Verringerung des Haltestroms zur Beibehaltung einer Rotorposition bei einem elektrisch kommutierten Elektromotor bekannt. Dieses Verfahren arbeitet zur Erkennung einer Veränderung der beizubehaltenden Rotorposition mit Hall-Sensoren. Außerdem werden mehrere Iterationsschritte durchgeführt, bei denen der reduzierte Haltestrom um seinen zur Beibehaltung der Rotorposition erforderlichen Zielwert herum oszilliert, was nachteiliger Weise zu Geräuschen und elektromagnetischen Emissionen führt.

Aus DE 10 2009 030 884 A1 und US 2007/0252587 ist es bekannt, die Rotorposition bei einem elektrisch kommutierten Elektromotor anhand der Größe der Motorinduktivität und deren Veränderung zu detektieren.

Verschiedene Ansteuerschaltungen für elektrisch kommutierte Elektromotoren sind in WO 88/02952 A1, WO 2009/071267 A1, DE10 2011 050101 A1 und US 4 272 714 A beschrieben.

Aufgabe der Erfindung ist es, die Haltebestromung sensorlos elektrisch kommutierter Elektromotoren zu verbessern.

Zur Lösung dieser Aufgabe wird mit der Erfindung ein Verfahren zur Erzeugung eines Haltemoments im Stillstandzustand eines mindestens zwei Wicklungen aufweisenden, elektrisch kommutierten Elektromotors, auf den im Stillstandzustand von außen ein ggf. variierendes Lastmoment wirkt, das einen vorgegebenen Maximalwert nicht überschreitet, vorgeschlagen, wobei bei dem Verfahren
a) in einen Anschluss einer ersten Wicklung ein Haltestrom mit einem Maximalwert eingespeist wird, der das vorgegebene, von außen auf den Elektromotor wirkende Maximallastmoment kompensiert,
b) ein eine Induktivität des Motors bei dessen Bestromung mit dem Maximalhaltestrom im Stillstandzustand repräsentierender Motorinduktivitätsparameter ermittelt wird und die Größe dieses Motorinduktivitätsparameters einen Anfangswert bildet,
c) durch sukzessives Verringern des Haltestroms versucht wird, eine betragsmäßige Abweichung des Motorinduktivitätsparameters gegenüber dem Anfangswert um mehr als eine vorgegebene Regelabweichung zu erreichen,
d) für den Fall, dass eine solche Abweichung des Motorinduktivitätsparameters sich nicht einstellt, die Verringerung des Haltestroms bei Erreichen eines vorgegebenen Mindestwerts für den Haltestrom beendet wird, woraufhin eine Regelung des Motorinduktivitätsparameters betragsmäßig auf einen Wert erfolgt, der nicht um mehr als die Regelabweichung von dem bei Beginn der Regelung gegebenen Regelungsausgangswert des Motorinduktivitätsparameters abweicht,
e) für den Fall, dass sich in Schritt c) eine Abweichung des Motorinduktivitätsparameters betragsmäßig um mehr als die vorgegebene Regelabweichung einstellt, eine Regelung des Motorinduktivitätsparameters betragsmäßig auf einen Wert erfolgt, der nicht um mehr als die Regelabweichung von dem bei Beginn der Regelung gegebenen Regelungsausgangswert des Motorinduktivitätsparameters abweicht,
f) mit der Regelung eine durch eine Veränderung des Lastmoments verursachte Änderung des Motorinduktivitätsparameters um betragsmäßig mehr als die Regelabweichung durch Veränderung des Haltestroms kompensiert wird, wobei der Haltestrom jedoch nicht kleiner als der vorgegebene Minimalwert und nicht größer als der vorgegebene Maximalwert gewählt wird.

Sinngemäß ist mit der Erfindung demnach vorgesehen, adaptiv den Haltestrom zu regeln, der für die Aufrechterhaltung des Stillstandzustands eines mindestens zwei Wicklungen aufweisenden, elektrisch kommutierten Elektromotors erforderlich ist, wobei dieses Verfahren bei sensorlosen elektrisch kommutierten Elektromotoren einsetzbar ist. Dabei wird zu Beginn des Stillstandzustands des Elektromotors der maximale Haltestrom in einen Anschluss einer ersten Wicklung des Elektromotors eingespeist. Dieser Haltestrom ist derart bemessen, dass er die applikationsbedingt maximal auftretenden Lastmomente auffängt, so dass der Elektromotor im Stillstandzustand stehen bleibt. Anschließen wird sukzessive mit einer Verringerung des Haltestroms begonnen. Während dieser Phase wird die Größe bzw. der Wert eines Parameters bestimmt, der die Induktivität des Elektromotors repräsentiert. Denn die Induktivität des Elektromotors ändert sich in dem Augenblick, in dem das am Motor anliegende Lastmoment zu einer Veränderung der Lage des Rotors des Elektromotors führt. Durch die Reduktion des Haltestroms soll nun dieser Zustand bewusst herbeigeführt werden. Die Reduktion des Haltestroms endet dann, wenn der Haltestrom einen vorgegebenen Mindestwert erreicht. Sollte sich bis dahin die Position des Rotors des Elektromotors nicht verändert haben, spricht dies dafür, dass das anliegende Lastmoment vergleichsweise klein bzw. nicht vorhanden ist.

Mit dem Erreichen des Mindestwerts für den Haltestrom wird auf eine Regelung des Motorinduktivitätsparameters umgeschaltet. Von nun an wird der Haltestrom geregelt, sofern sich der Motorinduktivitätsparameter um mehr als eine vorgegebene Regelabweichgröße, die gleich Null oder ungleich Null sein kann, verändert. Hierdurch kann also nun der Motorstrom größenmäßig an das Niveau angepasst und eingestellt werden, was an Haltestromeinspeisung erforderlich ist, um den Elektromotor in Abhängigkeit von einem variierenden Lastmoment im Stillstandzustand zu halten.

Der Übergang von der sukzessiven Verringerung des Haltestroms zur Haltestromregelung erfolgt erfindungsgemäß ohne Iterationsschritte, also ohne Zwischenschaltung einer Zwei-Punkt-Steuerung, bei der der Istwert für den Haltestrom um dessen Ziel- bzw. Sollwert oszillieren würde. Vielmehr handelt es sich von Beginn der erfindungsgemäßen Regelung an um eine kontinuierliche Regelung.

Es existieren verschiedene Beispiele dafür, welcher Wert im Stillstandzustand des Elektromotors erfasst bzw. ermittelt werden kann, um den Motorinduktivität repräsentierenden Parameter zu bilden. Als zweckmäßig hat es sich herausgestellt, wenn der Motorinduktivitätsparameter anhand der Rezirkulationszeitspanne ermittelt wird, die sich einstellt, wenn bei der Haltebestromung in eine andere Wicklung als diejenige, in die der Haltestrom eingespeist wird, ein Teststrom eingespeist wird. Die Teststromeinspeisung erfolgt zweckmäßigerweise in Form von Testpulsen.

Die Erfassung der Größe der Motorinduktivität kann grundsätzlich mittels eines Sensors, z.B. eines induktiv arbeitenden Sensors erfolgen. Wesentlich vorteilhafter ist es allerdings, diesbezüglich sensorlos zu arbeiten, was nachfolgend anhand von verschiedenen Ausführungsbeispielen beschrieben werden wird. In weiterer zweckmäßiger Ausgestaltung der Erfindung ist daher insoweit vorgesehen, dass der Elektromotor mittels einer Treiberschaltung mit den Wicklungsanschlüssen des Elektromotors zugeordneten Treiberendstufen angesteuert wird, dass der Abfall des als ein Puls eingespeisten Teststroms mittels eines Entladestromdetektors ermittelt wird, der einem Anschluss derjenigen Wicklung des Elektromotors zugeordnet ist, in die der Teststrom als Puls eingespeist wird, und dass die Rezirkulationszeitspanne anhand des Ausgangssignals des Entladestromdetektors d.h. anhand des Zeitpunkts des Auftretens des Ausgangssignal in Relation zum Testpuls-Erzeugungszeitpunkt ermittelt wird.

Bei dem zuvor beschriebenen Ausführungsbeispiel erzeugt der Endladestromdetektor mit Vorteil dann ein Ausgangssignal, wenn der Wert des Teststroms bzw. Testpulses bis unterhalb des Mindestwerts abgefallen ist.

In weiterer zweckmäßiger Ausgestaltung der Erfindung kann vorgesehen sein, dass bei Realisierung des Elektromotors als unipolarer Schrittmotor zusätzlich zu den für unipolare Schrittmotore üblichen Treiberendstufen pro Treiberendstufe eine Clamping-Schaltung eingesetzt wird, die während der Rezirkulationszeitspanne die Spannung an dem Wicklungsanschluss, in den der Teststrom als Puls eingespeist wurde, auf einen Vorgabewert begrenzt, und dass der Entladestromdetektor die Beendigung der Spannungsbegrenzung signalisiert, wobei anhand dessen (d.h. anhand des Zeitpunkts) die Rezirkulationszeitspanne ermittelt wird.

Schließlich kann bei einer weiteren Ausgestaltung der Erfindung vorgesehen sein, dass der Elektromotor mittels einer Stromchopperkomparatoren aufweisenden Stromchopperschaltung angesteuert wird, dass die Einspeisung des Haltestroms durch Stromchopperansteuerung des Anschlusses der ersten Wicklung erfolgt, dass in den Anschluss der ersten Wicklung mit Beginn eines Taktintervalls der Stromchopperansteuerung ein Strom bis zu einem Vorgabewert ansteigend und anschließend bis zum Ende des Taktintervalls abfallend eingespeist wird und dass die Chopperzeitdauer ab Beginn des Taktintervalls bis zu dem Zeitpunkt innerhalb des Taktintervalls, zu dem der Strom den Vorgabewert erreicht, als Motorinduktivitätsparameter verwendet wird.

Zur Lösung der oben genannten Aufgabe der Erfindung dient erfindungsgemäß auch eine Vorrichtung zur Erzeugung eines Haltemoments im Stillstandzustand eines mindestens zwei Wicklungen aufweisenden, elektrisch kommutierten Elektromotors, auf den im Stillstandzustand von außen ein ggf. variierendes Lastmoment wirkt, das einen vorgegebenen Maximalwert nicht überschreitet, mit
- eine Haltestromerzeugungseinheit zur Einspeisung eines Haltestroms in einen Anschluss einer ersten Wicklung des Elektromotors,
- einer Motorinduktivitätserfassungseinheit zur Erfassung eines den Wert der Motorinduktivität im Stillstand des Elektromotors repräsentierenden Motorinduktivitätsparameters,
- einem Regler zur Regelung des Haltestroms im Stillstand des Elektromotors zwecks Kompensation eines von außen auf den Elektromotor wirkenden, ggf. variierenden Lastmoments, wobei dem Regler als Regelabweichung die Differenz aus einem Motorinduktivitätsparameter-Sollwert als Führungsgröße und einem Motorinduktivitätsparameter-Istwert als Rückführgröße zugeführt wird, wobei der Motorinduktivitätsparameter-Istwert derjenige Wert ist, der sich aufgrund der Größe des im Stillstand eingespeisten Haltestroms und der Größe des auf den Elektromotor wirkenden Lastmoments einstellt, und wobei der Regler als Stellgröße ein Signal an die Haltestromerzeugungseinheit ausgibt, und
- einer Ansteuereinheit zur
   - im Stillstand des Elektromotors erfolgenden Ansteuerung der Haltestromerzeugungseinheit zur Einspeisung eines Maximalhaltestroms zur Kompensation des im Stillstand des Elektromotors potentiell von außen auf den Elektromotor wirkenden Maximallastmoments,
   - Ansteuerung der Motorinduktivitätserfassungseinheit zwecks Erfassung des Motorinduktivitätsparameters bei Bestromung des Elektromotors mit dem Maximalhaltestrom,
   - Umschaltung zwischen einem ersten Betriebsmodus, in dem eine Ansteuerung der Haltestromerzeugungseinheit durch die Ansteuereinheit erfolgt, und einem zweiten Betriebsmodus, in dem die Ansteuerung der Haltestromerzeugungseinheit durch den Regler erfolgt,
   - Ansteuerung der Haltestromerzeugungseinheit zur Einspeisung eines sich ausgehend vom Maximalhaltestrom sukzessive verringernden Haltestroms zwecks Hervorrufens einer Regelabweichung am Eingang des Reglers, die größer ist als ein vorgebbarer Schwellwert, wobei diese Ansteuerung der Haltestromerzeugungseinheit spätestens dann endet, wenn der Haltestrom bis auf einen vorgebbaren Mindeststrom verringert ist, und
   - Aktivierung der Funktion des Reglers zwecks Wechselns der Ansteuerung der Haltestromerzeugungseinheit von der Ansteuereinheit auf den Regler, wenn während der sukzessiven Verringerung des Haltestroms die Regelabweichung größer als der Schwellwert ist, und zwar zwecks Regelung der Motorinduktivität auf die Größe des bei Aktivierung der Funktion des Reglers gegebenen Regelungsausgangswert des Motorinduktivitätsparameters.

Zweckmäßig wird bei der erfindungsgemäßen Vorrichtung eine Teststromerzeugungseinheit zur Erzeugung von in eine andere als die erste Wicklung einspeisbaren Testpulsen während des Stillstands des Elektromotors eingesetzt, wobei die Motorinduktivitätserfassungseinheit als Motorinduktivitätsparameter die sich aus der Einspeisung eines Testpulses ergebende Rezirkulationszeitspanne erfasst.

Bei der zuvor genannten Variante der Erfindung kann zusätzlich eine Treiberschaltung mit den Wicklungsanschlüssen des Elektromotors zugeordneten Treiberendstufen und ein Entladestromdetektor vorgesehen sein, der einem Anschluss derjenigen Wicklung des Elektromotors zugeordnet ist, in den die Testpulse einspeisbar sind, wobei eine Rezirkulationszeitspanne anhand des Ausgangsignals des Entladestromdetektors ermittelbar ist.

Hierbei kann es zweckmäßig sein, dass der Entladestromdetektor ein Ausgangssignal erzeugt, wenn der Wert des Teststroms bis unterhalb des Mindestwerts abgefallen ist.

Bei Realisierung des Elektromotors als unipolarer Schrittmotor ist zweckmäßigerweise pro Treiberendstufe eine Clamping-Schaltung zur Begrenzung der Spannung auf einen Vorgabewert an derjenigen Wicklung des Elektromotors vorgesehen, in den die Testpulse einspeisbar sind, wobei der Entladestromdetektor bei Verringerung bis unterhalb des Vorgabewerts ein Ausgangssignal ausgibt.

In weiterer zweckmäßiger Ausgestaltung der erfindungsgemäßen Vorrichtung kann vorgesehen sein, dass die Haltestromerzeugungseinheit eine Stromchopperschaltung zur Stromchopperansteuerung des Anschlusses der ersten Wicklung aufweist, dass in den Anschluss der ersten Wicklung mit Beginn eines Taktintervals der Stromchopperansteuerung ein Strom bis zu einem Vorgabewert ansteigend und anschließend bis zum Ende des Taktintervals abfallend einspeisbar ist und dass die Chopperzeitdauer ab Beginn des Taktintervals bis zu dem Zeitpunkt innerhalb des Taktintervals, zu dem der Strom den Vorgabewert erreicht, der die Motorinduktivität repräsentierende Motorinduktivitätsparameter ist.

Erfindungsgemäß wird bei einem z.B. als bipolarer Stepper-Motor ausgeführten sensorlosen, elektrisch kommutierten Elektromotor eine der beiden Wicklungen dazu genutzt, um im Stillstandzustand einen einstellbaren Haltestrom einzuspeisen. Dies kann je nach Ansteuerkonzept durch Stromquellen, Chopper-Stromgeneratoren oder durch PWM-Erzeugung erfolgen. Auf die zweite Wicklung werden zu speziellen Zeiten beispielsweise Testströme aufmoduliert, und zwar zweckmäßigerweise zyklisch Testpulse aufmoduliert, deren Energieeintrag möglichst gering und deren Modulation so gewählt ist, dass es zu möglichst geringen bzw. keinen mechanischen und akustischen Störungen kommt. Eine Auswerteelektronik erfasst nun das Abklingverhalten dieser Testpulse und damit deren Rezirkulationszeitspannen.

Diese Auswerteelektronik ist zusammen mit einer Vorrichtung zur Generierung der Testpulse in Kombination mit den üblichen Treiberschaltungen als eine Ausführungsform der erfindungsgemäßen Vorrichtung zur Realisierung des erfindungsgemäßen Verfahrens anzusehen.

Bei Versuchen hat sich gezeigt, dass die gewonnenen Messwerte nahezu unabhängig von der Höhe des Haltestroms sind, die Messwerte jedoch abhängig von dem auf den Motor einwirkenden Lastmoment sind. Ein solches Lastmoment führt zu einer leichten Veränderung der mechanischen Position des Rotors, die mitunter als auch "Schleppverlust" oder "Phasenwinkel" bezeichnet wird.

Die beschriebene leichte Veränderung der mechanischen Position des Rotors hat einen Einfluss auf die Motorinduktivität und damit die Messergebnisse der Auswerteelektronik, die das Abklingverhalten und damit die Rezirkulationszeitspannen der Testpulse erfasst.

Eine typische Vorgehensweise zur Umsetzung der Erfindung ist beispielsweise, dass der Elektromotor nach einem applikationsspezifischen Betrieb zunächst gestoppt und wie üblich mit maximalen Haltestrom beaufschlagt wird, der das spezifische Haltemoment unter den spezifischen mechanischen maximalen Lastzuständen garantiert. Erfindungsgemäß werden dann spätestens ab diesem Zeitpunkt beispielsweise die oben erwähnten Testpulse in eine andere Wicklung eingespeist, als diejenige Wicklung, in die der Haltestrom eingespeist wird.

Sodann wird sukzessive der Haltestrom reduziert und die Auswertung wird kontinuierlich, wie oben beschrieben, weitergeführt. Bei Anliegen eines mechanischen Lastmoments auf den Motor werden nun bei Reduzierung des Haltestroms die Messwerte, wie oben beschrieben, zu driften beginnen. Sollte dies der Fall sein, wird erfindungsgemäß von einer weiteren Reduktion des Haltestroms abgesehen, sobald das Ausmaß der Drift einen vorgegebenen Schwellwert überschreitet.

Im bevorzugter Ausführungsform ist auf dieser Basis damit ein Regelsystem umgesetzt, welches den Haltestrom so regelt, dass kein Rotorpositionsverlust stattfindet, und den Haltestrom bei nachlassendem mechanischen Lastmoment reduziert und bei steigendem mechanischen Lastmoment erhöht.

Bei unipolaren Stepper-Motoren kann das zuvor beschriebene Verfahren in physikalisch gleicher Weise umgesetzt werden.

Je nach Typ des sensorlos elektrisch kommutierten Elektromotors kann die Erfindung entsprechend angepasst umgesetzt werden, wobei garantiert werden kann, dass die oben erwähnte Unabhängigkeit der Messsignale für die Ermittlung der Motorinduktivität von der Höhe der Haltebestromung gewehrleistet ist.

Mit der Erfindung lässt sich die Haltebestromung selbst bei kostengünstigen Stellantrieben, die sensorlos elektrisch kommutierte Elektromotoren verwenden, derart adaptiv realisieren, wie es bislang lediglich bei sensorbehafteten Systemen oder bei Systemen mit komplexen BLDC-Systemen mit hoher und damit aufwendiger Rechnerleistung möglich ist.

Die Erfindung wird nachfolgend anhand mehrerer Ausführungsbeispiele sowie unter Bezugnahme auf die Zeichnung näher erläutert. Im Einzelnen zeigen dabei:
- Fig. 1: ein Beispiel für die Beschaltung eines bipolaren Stepper-Motors mit adaptiver Haltebestromung,
- Fig. 2: ein beispielhaftes Verhalten eines bipolaren Motors mit adaptiver Haltebestromung,
- Fig. 3: ein Beispiel für einen unipolaren Stepper-Motor mit adaptiver Haltebestromung und
- Fig. 4: ein Beispiel für einen Drei-phasigen Elektromotor mit adaptiver Haltebestromung.

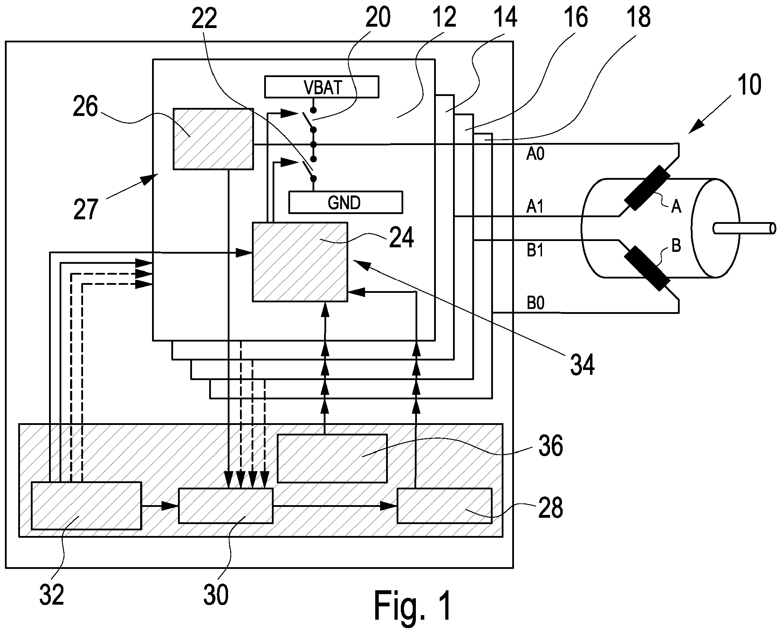

Wie in Fig. 1 gezeigt, kann die Ansteuerung eines bipolaren Stepper-Motors 10 für die adaptive Haltebestromung erweitert werden. Eine der beiden Wicklungen A bzw. B wird genutzt, um einen einstellbaren Haltestrom einzuspeisen, wobei der Haltestrom erzeugt wird durch mindestens eines der nachfolgend beschriebenen Verfahren:
- einstellbare Stromquellen,
- einstellbare Stromsenken,
- PWM-Modulation mit einstellbarem Duty-Cycle oder
- Chopper-Stromregelung mit einstellbaren Stromschwellen.

Auf die zweite Wicklung wird der Teststrom aufmoduliert, dessen Energieeintrag möglichst gering ist und dessen Modulation so gewählt ist, dass es zu möglichst geringen mechanischen und akustischen Störungen kommt.

Die übliche Ansteuerung für den bipolaren Stepper-Motor umfasst die Endstufen 12, 14, 16 und 18, die, wie in Fig. 1 gezeigt, mit den Wicklungsanschlüssen A0, A1, B1, B0 verbunden sind. Der Aufbau einer Endstufe ist exemplarisch in Fig. 1 anhand der Endstufe 12 gezeigt. Die Endstufe 12 umfasst einen Highside-Treiber 20 und einen Lowside-Treiber 22, die mit VS 1 (beispielweise VBAT) bzw. VS 2 (beispielsweise GND) verbunden sind. Die Ansteuerung der beiden Treiber erfolgt mittels einer Ansteuereinheit 24. Ein Rezirkulationsdetektor 26 z.B. ausgeführt als Entladestromdetektor 27 ist ebenfalls vorgesehen.

Für die Haltebestromung existiert ein Regler 28, der für jede Treiberendstufe ein Ausgangssignal erzeugt, das der Ansteuereinheit 24 der betreffenden Treiberstufe zugeführt wird. Von den Rezirkulationsdetektoren 26 werden Signale ausgesendet, die pro Treiberstufe in einem Zähler 30 gezählt werden. Die Ausgangssignale der Rezirkulationsdetektoren 26 werden erzeugt in Folge der Einspeisung von Testpulsen, die von einer Teststromerzeugungseinheit 32 in Form eines Testpulsgenerators erzeugt werden.

In dem Fig. 1 dargestellten Ausführungsbeispiel erzeugt die Teststromerzeugungseinheit 32 Testpulse, die entweder dem Anschluss A0 oder dem Anschluss A1 der Wicklung A zugeführt werden. Der Rezirkulationsdetektor 26 derjenigen Endstufe 12, 14, die dem Anschluss A0 bzw. dem Anschluss A1 der Wicklung A zugeordnet ist, liefert daraufhin Signale, die dem Zähler 30 zugeführt werden. Hierdurch werden die Rezirkulationszeitspannen messtechnisch erfasst. In Abhängigkeit von der Größe der Rezirkulationszeitspanne regelt der Regler 28 den Haltestrom bzw. steuert der Regler 28 eine Haltestromerzeugungsvorrichtung 34 an, bei der es sich letztendlich um die Ansteuereinheit zur Ansteuerung der Treiber 20, 22 der Endstufen handelt, die mit den Anschlüssen B0 und B1 der Wicklung B verbunden sind.

Eine Ansteuereinheit 36 kann ihrerseits zu Beginn der adaptiven Haltestromregelung die Haltestromerzeugungsvorrichtungen 34 ansteuern, und zwar zwecks Reduktion des Haltestroms. Diese Reduktion des Haltestroms hält an, bis entweder ein Mindestwert für den Haltestrom erreicht ist oder aber bis eine Veränderung der Rezirkulationszeitspannen erkannt wird, die über ein vorgebbares Mindestmaß hinausgeht. In beiden Fällen wird auf den Regler 28 umgeschaltet, so dass von da ab die Regelung der Rezirkulationszeitspanne durch den Haltestrom erfolgt.

In Fig. 1 sind einige der Signalpfade gestrichelt gezeichnet. Diese Signalpfade sind nur dann notwendig, wenn die Erfindung auch mit inverser Wicklungszuordnung, bezogen auf Testpulse und Haltestrom, genutzt wird oder wenn das Verfahren auch auf den jeweiligen zweiten Anschluss der Wicklung angewendet wird. Bei Anwendung des Verfahrens auf alle Wicklungen wird die feinste Auflösung für die Regelung der Beibehaltung der Halteposition erreicht.

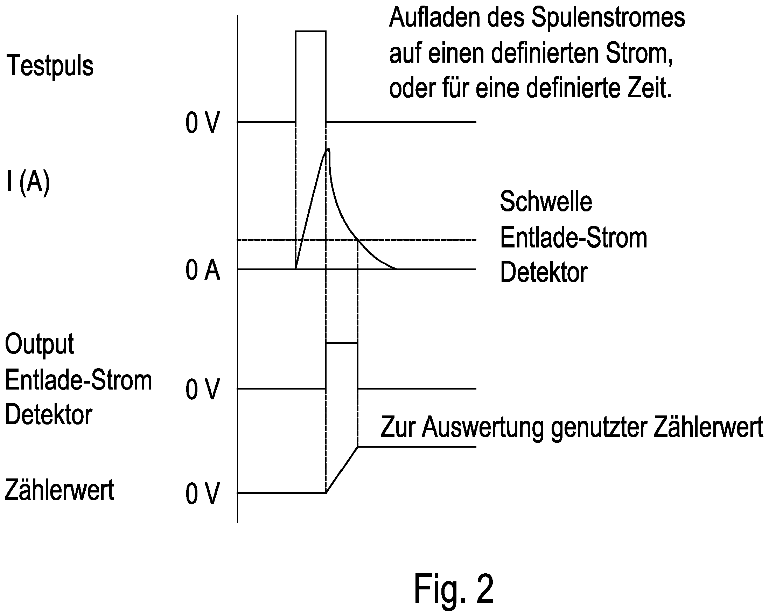

Fig. 2 zeigt, dass die gewonnenen Messwerte nahezu unabhängig von der Höhe des Haltstroms, jedoch abhängig von dem auf den Motor einwirkenden Lastmoment sind.

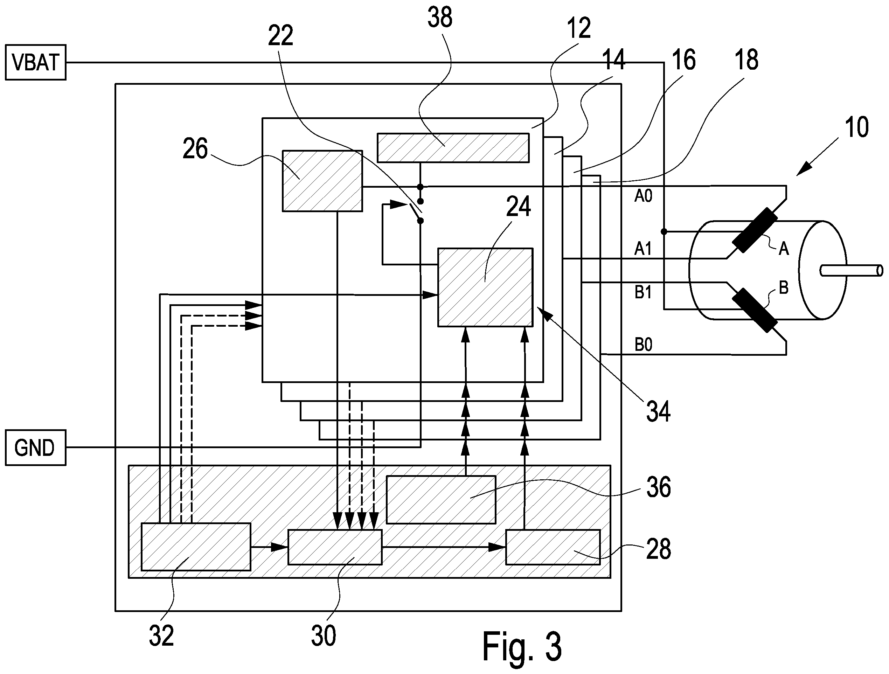

Fig. 3 zeigt die Anwendung der Erfindung bei einem unipolaren Stepper-Motor. Soweit die in Fig. 3 gezeigten Elemente der Beschaltung des unipolaren Stepper-Motors identisch bzw. funktionsgleich mit denjenigen Komponenten sind, die in Fig. 1 gezeigt sind, sind sie in Fig. 3 mit den gleichen Bezugszeichen wie in Fig. 1 versehen.

Zusätzlich zu den Komponenten der einzelnen Endstufen 12, 14, 16, 18, die mit den Wicklungsanschlüssen A0, A1, B1, B0 verbunden sind, weisen diese Endstufen im Ausführungsbeispiel nach Fig. 3 noch jeweils eine Clamping-Schaltung 38 auf. Dafür entfällt der Highside-Treiber.

Auch für die Fig. 3 gilt, dass dort die gestrichelt gezeigten Signalpfade notwendig sind, wenn das Verfahren auch mit inverser Wicklungszuordnung, bezogen auf Testpulse und Haltestrom, genutzt wird. Bei Anwendung des Verfahrens auf alle Wicklungen wird die feinste Auflösung für die Regelung der Beibehaltung der Halteposition erreicht.

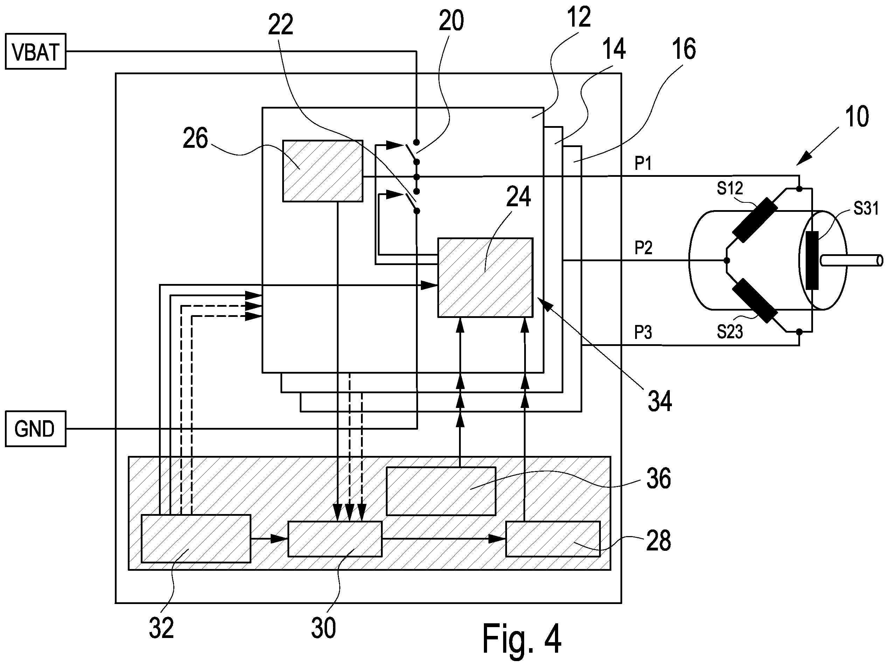

In Fig. 4 ist ein letztes Ausführungsbeispiel der Applikation der Erfindung bei einem in diesem Fall als Drei-phasiger Stepper-Motor ausgeführten elektrisch kommutierten Elektromotor ohne Kommutierungssensoren gezeigt.

Soweit die in Fig. 4 gezeigten Elemente der Beschaltung des unipolaren Stepper-Motors identisch bzw. funktionsgleich mit denjenigen Komponenten sind, die in Fig. 1 gezeigt sind, sind sie in Fig. 4 mit den gleichen Bezugszeichen wie in Fig. 1 versehen. Auch in Fig. 4 sind einige Signalpfade gestrichelt gezeigt, was bedeutet, dass diese Signalpfade dann notwendig sind, wenn das Verfahren auch mit inverser Wicklungszuordnung, bezogen auf Testpulse und Haltestrom, genutzt wird. Bei Anwendung des Verfahrens auf alle Wicklungen wird die feinste Auflösung für die Regelung der Beibehaltung der Halteposition erreicht.

Anhand der Fign. 1 bis 4 wurden drei Ausführungsbeispiele beschrieben, wobei die für die erfindungsgemäße adaptive Haltebestromung involvierten Module durch Schraffur jeweils gekennzeichnet sind. Je nach gewünschter Systemperformance kann es ausreichend sein, die Auswertung auf eine oder mehrere Treiberendstufen zu limitieren. Bei Anwendung des Verfahrens auf alle Wicklungen und damit unter Nutzung alle Endstufen wird die feinste Auflösung für die erfindungsgemäß mögliche Haltepositionsbeibehaltung erreicht.

### BEZUGSZEICHEN LISTE

- 10: Stepper-Motor
- 12: Treiberendstufe
- 14: Treiberendstufe
- 16: Treiberendstufe
- 18: Treiberendstufe
- 20: Highside-Treiber
- 22: Lowside-Treiber
- 24: Ansteuereinheit
- 26: Rezirkulationsdetektor
- 27: Entladestromdetektor
- 28: Regler
- 30: Zähler
- 32: Teststromerzeugungseinheit
- 34: Haltestromerzeugungseinheit
- 36: Ansteuereinheit
- 38: Clamping-Schaltung
- A: Wicklung
- B: Wicklung
- A0: Wicklungsanschluss
- A1: Wicklungsanschluss
- B0: Wicklungsanschluss
- B1: Wicklungsanschluss
- S12: Wicklung
- S23: Wicklung
- S31: Wicklung
- P1: Wicklungsanschluss
- P2: Wicklungsanschluss
- P3: Wicklungsanschluss

## Patentansprüche

1. Verfahren zur Erzeugung eines Haltemoments im Stillstandzustand eines mindestens zwei Wicklungen (A, B, S12, S23, S31) aufweisenden, elektrisch kommutierten Elektromotors, auf den im Stillstandzustand von außen ein ggf. variierendes Lastmoment wirkt, wobei bei dem Verfahren
a) in einen Anschluss (A0, A1, B0, B1, P1, P2, P3) einer ersten Wicklung (A, B, S12, S23, S31) ein Haltestrom mit einem vorgebbaren Maximalwert eingespeist wird,
b) ein eine Induktivität des Elektromotors (10) bei dessen Bestromung mit dem Maximalhaltestrom im Stillstandzustand repräsentierender Motorinduktivitätsparameter ermittelt wird und die Größe dieses Motorinduktivitätsparameters einen Anfangswert bildet,
c) durch sukzessives Verringern des Haltestroms versucht wird, eine betragsmäßige Abweichung des Motorinduktivitätsparameters gegenüber dem Anfangswert um mehr als eine vorgegebene Regelabweichung zu erreichen, **dadurch gekennzeichnet dass**,
d) für den Fall, dass eine solche Abweichung des Motorinduktivitätsparameters sich nicht einstellt, die Verringerung des Haltestroms bei Erreichen eines vorgegebenen Mindestwerts für den Haltestrom beendet wird, woraufhin eine Regelung des Motorinduktivitätsparameters betragsmäßig auf einen Wert erfolgt, der nicht um mehr als die Regelabweichung von dem bei Beginn der Regelung gegebenen Regelungsausgangswert des Motorinduktivitätsparameters abweicht,
e) für den Fall, dass sich in Schritt c) eine Abweichung des Motorinduktivitätsparameters betragsmäßig um mehr als die vorgegebene Regelabweichung einstellt, eine Regelung des Motorinduktivitätsparameters betragsmäßig auf einen Wert erfolgt, der nicht um mehr als die Regelabweichung von dem bei Beginn der Regelung gegebenen Regelungsausgangswert des Motorinduktivitätsparameters abweicht,
f) mit der Regelung eine durch eine Veränderung des Lastmoments verursachte Änderung des Motorinduktivitätsparameters um betragsmäßig mehr als die Regelabweichung durch Veränderung des Haltestroms kompensiert wird, wobei der Haltestrom jedoch nicht kleiner als der vorgegebene Minimalwert und nicht größer als der vorgegebene Maximalwert gewählt wird.

2. Verfahren nach Anspruch 1, **dadurch gekennzeichnet, dass** als Motorinduktivitätsparameter die Rezirkulationszeitspanne verwendet wird, innerhalb derer ein als Puls in eine andere als die erste Wicklung (A, B, S12, S23, S31) eingespeister Teststrom ab seiner Einspeisung bis auf einen vorgebbaren Mindestwert, abgefallen ist.

3. Verfahren nach Anspruch 2, **dadurch gekennzeichnet, dass** der Elektromotor (10) mittels einer Treiberschaltung mit den Wicklungsanschlüssen (A0, A1, B0, B1, P1, P2, P3) des Elektromotors (10) zugeordneten Treiberendstufen (12, 14, 16, 18) angesteuert wird, dass der Abfall des als ein Puls eingespeisten Teststroms mittels eines Entladestromdetektors (27) ermittelt wird, der einem Anschluss (A0, A1, B0, B1, P1, P2, P3) derjenigen Wicklung (A, B, S12, S23, S31) des Elektromotors (10) zugeordnet ist, in die der Teststrom als Puls eingespeist wird, und dass die Rezirkulationszeitspanne anhand des Ausgangssignals des Entladestromdetektors (27) ermittelt wird.

4. Verfahren nach Anspruch 3, **dadurch gekennzeichnet, dass** der Entladestromdetektor (27) ein Ausgangssignal erzeugt, wenn der Wert des Teststroms bis unterhalb des Mindestwerts abgefallen ist.

5. Verfahren nach Anspruch 3, **dadurch gekennzeichnet, dass** bei Realisierung des Elektromotors (10) als unipolarer Schrittmotor zusätzlich zu den für unipolare Schrittmotore üblichen Treiberendstufen pro Treiberendstufe (12, 14, 16, 18) eine Clamping-Schaltung (38) eingesetzt wird, die während der Rezirkulationszeitspanne die Spannung an dem Wicklungsanschluss (A0, A1, B0, B1, P1, P2, P3), in den der Teststrom als Puls eingespeist wurde, auf einen Vorgabewert begrenzt, und dass der Entladestromdetektor die Beendigung der Spannungsbegrenzung signalisiert, wobei anhand dessen die Rezirkulationszeitspanne ermittelt wird.

6. Verfahren nach Anspruch 1, **dadurch gekennzeichnet, dass** der Elektromotor mittels einer Stromchopperkomparatoren aufweisenden Stromchopperschaltung angesteuert wird, dass die Einspeisung des Haltestroms durch Stromchopperansteuerung eines Anschlusses (A0, A1, B0, B1, P1, P2, P3) der ersten Wicklung (A, B, S12, S23, S31) erfolgt, dass in den Anschluss (A0, A1, B0, B1, P1, P2, P3) der ersten Wicklung (A, B, S12, S23, S31) mit Beginn eines Taktintervalls der Stromchopperansteuerung ein Strom bis zu einem Vorgabewert ansteigend und anschließend bis zum Ende des Taktintervalls abfallend eingespeist wird und dass die Chopperzeitdauer ab Beginn des Taktintervalls bis zu dem Zeitpunkt innerhalb des Taktintervalls, zu dem der Strom den Vorgabewert erreicht, als Motorinduktivitätsparameter verwendet wird.

7. Vorrichtung zur Erzeugung eines Haltemoments im Stillstandzustand eines mindestens zwei Wicklungen (A, B, S12, S23, S31) aufweisenden, elektrisch kommutierten Elektromotors, auf den im Stillstandzustand von außen ein ggf. variierendes Lastmoment wirkt, mit
- einer Haltestromerzeugungseinheit (34) zur Einspeisung eines Haltestroms in einen Anschluss (A0, A1, B0, B1, P1, P2, P3) einer ersten Wicklung (A, B, S12, S23, S31) des Elektromotors,
- einer Motorinduktivitätserfassungseinheit zur Erfassung eines den Wert der Motorinduktivität im Stillstand des Elektromotors (10) repräsentierenden Motorinduktivitätsparameters,
- einem Regler zur Regelung des Haltestroms im Stillstand des Elektromotors (10) zwecks Kompensation eines von außen auf den Elektromotor (10) wirkenden, ggf. variierenden Lastmoments, wobei dem Regler (28) als Regelabweichung die Differenz aus einem Motorinduktivitätsparameter-Sollwert als Führungsgröße und einem Motorinduktivitätsparameter-Istwert als Rückführgröße zugeführt wird, wobei der Motorinduktivitätsparameter-Istwert derjenige Wert ist, der sich aufgrund der Größe des im Stillstand eingespeisten Haltestroms und der Größe des auf den Elektromotor (10) wirkenden Lastmoments einstellt, und wobei der Regler als Stellgröße ein Signal an die Haltestromerzeugungseinheit (34) ausgibt, und
- einer Ansteuereinheit (36) zur
- im Stillstand des Elektromotors (10) erfolgenden Ansteuerung der Haltestromerzeugungseinheit (34) zur Einspeisung eines Maximalhaltestroms,
- Ansteuerung der Motorinduktivitätserfassungseinheit zwecks Erfassung des Motorinduktivitätsparameters bei Bestromung des Elektromotors (10) mit dem Maximalhaltestrom,
- Umschaltung zwischen einem ersten Betriebsmodus, in dem eine Ansteuerung der Haltestromerzeugungseinheit (34) durch die Ansteuereinheit (36) erfolgt, und einem zweiten Betriebsmodus, in dem die Ansteuerung der Haltestromerzeugungseinheit (34) durch den Regler erfolgt,
- Ansteuerung der Haltestromerzeugungseinheit (34) zur Einspeisung eines sich ausgehend vom Maximalhaltestrom sukzessive verringernden Haltestroms zwecks Hervorrufens einer Regelabweichung am Eingang des Reglers (28), die größer ist als ein vorgebbarer Schwellwert, wobei diese Ansteuerung der Haltestromerzeugungseinheit (34) spätestens dann endet, wenn der Haltestrom bis auf einen vorgebbaren Mindeststrom verringert ist, **dadurch gekennzeichnet dass**,
die Ansteuereinheit (36) eingerichtet ist zur
- Aktivierung der Funktion des Reglers (28) zwecks Wechselns der Ansteuerung der Haltestromerzeugungseinheit (34) von der Ansteuereinheit (36) auf den Regler (28), wenn während der sukzessiven Verringerung des Haltestroms die Regelabweichung größer als der Schwellwert ist, und zwar zwecks Regelung der Motorinduktivität auf die Größe des bei Aktivierung der Funktion des Reglers (28) gegebenen Regelungsausgangswert des Motorinduktivitätsparameters.

8. Vorrichtung nach Anspruch 7, **gekennzeichnet durch** eine Teststromerzeugungseinheit (32) zur Erzeugung von in eine andere als die erste Wicklung (A, B, S12, S23, S31) einspeisbaren Testpulsen während des Stillstands des Elektromotors (10), wobei die Motorinduktivitätserfassungseinheit als Motorinduktivitätsparameter die sich aus der Einspeisung eines Testpulses ergebende Rezirkulationszeitspanne erfasst.

9. Vorrichtung nach Anspruch 8, **gekennzeichnet durch** eine Treiberschaltung mit den Wicklungsanschlüssen (A0, A1, B0, B1, P1, P2, P3) des Elektromotors (10) zugeordneten Treiberendstufen (12, 14, 16, 18) und einen Entladestromdetektor (27), der einem Anschluss (A0, A1, B0, B1, P1, P2, P3) derjenigen Wicklung (A, B, S12, S23, S31) des Elektromotors (10) zugeordnet ist, in den die Testpulse einspeisbar sind, wobei eine Rezirkulationszeitspanne anhand des Ausgangsignals des Entladestromdetektors (27) ermittelbar ist.

10. Vorrichtung nach Anspruch 9, **dadurch gekennzeichnet, dass** der Entladestromdetektor (27) ein Ausgangssignal erzeugt, wenn der Wert des Teststroms bis unterhalb vorgebaren Mindestwerts abgefallen ist.

11. Vorrichtung nach Anspruch 9, **dadurch gekennzeichnet, dass** bei Realisierung des Elektromotors (10) als unipolarer Schrittmotor pro Treiberendstufe (12, 14, 16, 18) eine Clamping-Schaltung (38) zur Begrenzung der Spannung auf einen Vorgabewert an derjenigen Wicklung (A, B, S12, S23, S31) des Elektromotors (10) vorgesehen ist, in den die Testpulse einspeisbar sind, wobei der Entladestromdetektor (27) bei Verringerung bis unterhalb des Vorgabewerts ein Ausgangssignal ausgibt.

12. Vorrichtung nach Anspruch 7, **dadurch gekennzeichnet, dass** die Haltestromerzeugungseinheit (34) eine Stromchopperschaltung zur Stromchopperansteuerung eines Anschlusses (A0, A1, B0, B1, P1, P2, P3) der ersten Wicklung (A, B, S12, S23, S31) aufweist, dass in den Anschluss (A0, A1, B0, B1, P1, P2, P3) der ersten Wicklung (A, B, S12, S23, S31) mit Beginn eines Taktintervals der Stromchopperansteuerung ein Strom bis zu einem Vorgabewert ansteigend und anschließend bis zum Ende des Taktintervals abfallend einspeisbar ist und dass die Chopperzeitdauer ab Beginn des Taktintervals bis zu dem Zeitpunkt innerhalb des Taktintervals, zu dem der Strom den Vorgabewert erreicht, der die Motorinduktivität repräsentierende Motorinduktivitätsparameter ist.

## Claims

1. Method for generating a blocking moment in a standstill state of an electrically commutated electric motor having at least two windings (A, B, S12, S23, S31), on which electric motor a possibly varying load moment acts from outside in the standstill state, wherein, in the method,
a) a blocking current with a maximum value is supplied into a terminal (A0, A1, B0, B1, P1, P2, P3) of a first winding (A, B, S12, S23, S31),
b) a motor inductivity parameter is determined which represents an inductivity of the electric motor when the maximum blocking current is supplied thereto in a standstill state, and the value of this maximum inductivity parameter forms an initial value,
c) it is attempted, by successively reducing the blocking current, to achieve a deviation of the value of the motor inductivity parameter from the initial value by more than a predetermined control deviation,
**characterized in that**
d) in case such a deviation of the motor inductivity parameter does not occur, the reduction of the blocking current is stopped upon reaching a predetermined minimum value for the blocking current, whereupon the value of the motor inductivity parameter is controlled to a value that does not deviate from the initial control value of the motor inductivity parameter given at the start of the control by more than the control deviation,
e) in case that in step c) a deviation of the value of the motor inductivity parameter by more than the predetermined control deviation occurs, the value of the motor inductivity parameter is controlled to a value that does not deviate from the initial control value of the motor inductivity parameter given at the start of the control by more than the control deviation,
f) a change of the motor inductivity parameter by a value greater than the control deviation, caused by a change of the load moment, is compensated by the control, the blocking current, however, being selected such that it is not smaller than the predetermined minimum value and such that it is not greater than the predetermined maximum value.

2. Method of claim 1, **characterized in that**, as the motor inductivity parameter, the recirculation period is used within which a test current, supplied as a pulse into a winding other than the first winding (A, B, S12, S23, S31), has dropped to a predeterminable minimum value.

3. Method of claim 2, **characterized in that** the electric motor (10) is controlled by means of a driver circuit having driver output stages (12, 14, 16, 18) associated to the winding terminals (A0, A1, B0, B1, P1, P2, P3) of the electric motor (10), that the drop of the test current supplied as a pulse is detected by means of a discharge current detector (27) associated to a terminal (A0, A1, B0, B1, P1, P2, P3) of that winding (A, B, S12, S23, S31) of the electric motor (10) into which the test current is supplied as a pulse, and that the recirculation period is determined based on the output signal of the discharge current detector (27).

4. Method of claim 3, **characterized in that** the discharge current detector (27) generates an output signal if the value of the test current has dropped to below the minimum value.

5. Method of claim 3, **characterized in that**, in case the electric motor (10) is configured as a unipolar stepper motor, a clamping circuit (38) is implemented per driver output stage (12, 14, 16, 18) in addition to the driver output stages common in unipolar stepper motors, which clamping circuit restricts the voltage at the winding terminal (A0, A1, B0, B1, P1, P2, P3) into which the test current has been supplied as a pulse, to a preset value during the recirculation period, and that the discharge current detector signals the end of the voltage restriction, the recirculation period being determined based thereon.

6. Method of claim 1, **characterized in that** the electric motor is controlled using a current chopper circuit including current chopper comparators, that the supply of the blocking current is effected by current chopper controlling the terminal (A0, A1, B0, B1, P1, P2, P3) of the first winding (A, B, S12, S23, S31), that with the start of a clock interval of the current chopper control a current is supplied into the terminal (A0, A1, B0, B1, P1, P2, P3) of the first winding (A, B, S12, S23, S31), which current increases up to a preset value and thereafter drops until the end of the clock interval, and that the chopper period from the start of the clock interval to the time within the clock interval at which the current reaches the preset value, is used as the motor inductivity parameter.

7. Device for generating a blocking moment in the standstill state of an electrically commutated electric motor (10) having at least two windings (A, B, S12, S23, S31), on which electric motor a possibly varying load moment acts from outside in the standstill state, comprising
- a blocking current generation unit (34) for supplying a blocking current into a terminal (A0, A1, B0, B1, P1, P2, P3) of a first winding (A, B, S12, S23, S31) of the electric motor,
- a motor inductivity detection unit for the detection of a motor inductivity parameter representing the value of the motor inductivity during standstill of the electric motor (10),
- a controller for controlling the blocking current during the standstill of the electric motor (10) for compensation of a possibly varying load moment acting on the electric motor (10) from outside, the controller (28) being supplied, as a control deviation, with the difference between a set value for the motor inductivity parameter as a reference variable and an actual value of the motor inductivity parameter as a feedback variable, the actual value of the motor inductivity parameter being the value that occurs due to the value of the blocking current supplied during standstill and the value of the load moment acting on the electric motor (10), and the controller outputting a signal to the blocking current generation unit as a control variable, and
- a control unit (36) for
- controlling, during the standstill of the electric motor (10), the blocking current generation unit (34) to supply a maximum blocking current,
- controlling the motor inductivity detection unit for the purpose of detecting the motor inductivity parameter when the electric motor (10) is supplied with the maximum blocking current,
- switching between a first operation mode in which the blocking current generation unit (34) is controlled by the control unit (36), and a second operating mode in which the blocking current generation unit (34) is controlled by the controller,
- controlling the blocking current generation unit (34) to supply a blocking current which decreases successively starting from the maximum blocking current so as to cause a control deviation at the input of the controller (28) which is greater than a predeterminable threshold value, this control of the blocking current generation unit (34) ending at the latest when the blocking current has been reduced to a predeterminable minimum current, **characterized in that** the control unit (36) is configured for
- activating the function of the controller (28) for switching the control of the blocking current generation unit (34) from the control unit (36) to the controller (28) if, during the successive reduction of the blocking current, the control deviation exceeds the threshold value, and to do so for the purpose of controlling the motor inductivity to the value of the control output value of the motor inductivity parameter given upon activation of the function of the controller (28).

8. Device of claim 7, **characterized by** a test current generation unit (32) for generating test pulses adapted to be supplied into a winding other than the first winding (A, B, S12, S23, S31) during the standstill of the electric motor (10), the motor inductivity detection unit detects, as the motor inductivity parameter, the recirculation period resulting from the supply of a test pulse.

9. Device of claim 8, **characterized by** a driver circuit having driver output stages (12, 14, 16, 18) associated to the winding terminals (A0, A1, B0, B1, P1, P2, P3) of the electric motor (10) and a discharge current detector (27) associated to a terminal (A0, A1, B0, B1, P1, P2, P3) of the winding (A, B, S12, S23, S31) of the electric motor (10) into which the test pulses can be supplied, a recirculation period being determinable based on the output signal of the discharge current detector (27).

10. Device of claim 9, **characterized in that** the discharge current detector (27) generates an output signal when the value of the test current has dropped to below the minimum value.

11. Device of claim 9, **characterized in that**, if the electric motor (10) is configured as a unipolar stepper motor, one clamping circuit (38) is provided per driver output stage (12, 14, 16, 18) to restrict the voltage to a preset value at that winding (A, B, S12, S23, S31) of the electric motor (10) into which the test pulses can be supplied, the discharge current detector (27) outputting an output signal upon a decrease to below the preset value.

12. Device of claim 7, **characterized in that** the blocking current generation unit (34) has a current chopper circuit for the current chopper control of the terminal (A0, A1, B0, B1, P1, P2, P3) of the first winding (A, B, S12, S23, S31), that, with the beginning of a clock interval of the current chopper control, a current can be supplied into the terminal (A0, A1, B0, B1, P1, P2, P3) of the first winding (A, B, S12, S23, S31), which current increases up to a preset value and thereafter drops until the end of the clock interval, and that the chopper period from the start of the clock interval to the time within the clock interval at which the current reaches the preset value, is the motor inductivity parameter representing the motor inductivity.

## Revendications

1. Procédé de production d'un couple de maintien dans l'état arrêté d'un moteur électrique à commutation électrique et comportant au moins deux enroulements (A, B, S12, S23, S31), sur lequel opère de l'extérieur dans l'état arrêté un couple de charge éventuellement variable, dans lequel lors du procédé
a) un courant de maintien avec une valeur maximale prédéfinissable est injecté dans un raccord (A0, A1, B0, B1, P1, P2, P3) d'un premier enroulement (A, B, S12, S23, S31) ,
b) un paramètre d'inductance moteur représentant une inductance du moteur électrique (10) lors de son alimentation avec le courant de maintien maximal dans l'état arrêté est déterminé et la grandeur de ce paramètre d'inductance moteur forme une valeur initiale,
c) il est tenté par réduction successive du courant de maintien d'obtenir une déviation du paramètre d'inductance moteur par rapport à la valeur initiale supérieure à une déviation de réglage prédéfinie, **caractérisé en ce que**
d) pour le cas où une telle déviation du paramètre d'inductance moteur ne se produit pas, la réduction du courant de maintien est cessée lorsqu'une valeur minimum prédéfinie est atteinte pour le courant de maintien, après quoi un réglage du paramètre d'inductance moteur s'effectue de manière quantitative jusqu'à une valeur ne déviant pas de la valeur de sortie de réglage, donnée au début du réglage, du paramètre d'inductance moteur de plus que la déviation de réglage,
e) pour le cas où une déviation du paramètre d'inductance moteur quantitativement supérieure à la déviation de réglage prédéfinie se produit dans l'étape c), un réglage du paramètre d'inductance moteur s'effectue de manière quantitative jusqu'à une valeur ne déviant pas de la valeur de sortie de réglage, donnée au début du réglage, du paramètre d'inductance moteur de plus que la déviation de réglage,
f) un changement du paramètre d'inductance moteur quantitativement supérieur à la déviation de réglage résultant d'une modification du couple de charge est compensé par modification du courant de maintien avec le réglage, dans lequel le courant de maintien est sélectionné comme ni inférieur à la valeur minimale prédéfinie ni supérieur à la valeur maximale prédéfinie.

2. Procédé selon la revendication 1, **caractérisé en ce que** la période de recirculation est utilisée comme paramètre d'inductance moteur, à l'intérieur de laquelle un courant de test injecté comme impulsion dans un autre enroulement que le premier (A, B, S12, S23, S31) a diminué de son injection jusqu'à une valeur minimum prédéfinissable.

3. Procédé selon la revendication 2, **caractérisé en ce que** le moteur électrique (10) est commandé au moyen d'un circuit pilote doté d'étages finaux pilotes (12, 14, 16, 18) associés aux raccords d'enroulement (A0, A1, B0, B1, P1, P2, P3) du moteur électrique (10), **en ce que** la diminution du courant de test injecté comme impulsion est déterminée au moyen d'un détecteur de courant de décharge (27), lequel est associé à un raccord (A0, A1, B0, B1, P1, P2, P3) de l'enroulement (A, B, S12, S23, S31) du moteur électrique (10) à travers lequel le courant de test est injecté comme impulsion, et **en ce que** la période de recirculation est déterminée à l'aide du signal de sortie du détecteur de courant de décharge (27).

4. Procédé selon la revendication 3, **caractérisé en ce que** le détecteur de courant de décharge (27) produit un signal de sortie lorsque la valeur du courant de test a diminué jusqu'en-dessous de la valeur minimum.

5. Procédé selon la revendication 3, **caractérisé en ce qu'**en cas de réalisation du moteur électrique (10) en tant que moteur pas-à-pas unipolaire, outre les étages finaux pilotes habituels pour les moteurs pas-à-pas unipolaires un circuit de fixation de niveau (38) par étage final pilote (12, 14, 16, 18) est utilisé, lequel limite pendant la période de recirculation la tension aux bornes du raccord d'enroulement (A0, A1, B0, B1, P1, P2, P3) à travers lequel le courant de test est injecté comme impulsion à une valeur prédéfinie, et **en ce que** le détecteur de courant de décharge signale la fin de la limitation de tension, dans lequel la période de recirculation est déterminée à l'aide de celui-ci.

6. Procédé d'après la revendication 1, **caractérisé en ce que** le moteur électrique est commandé au moyen d'un circuit de découpage de courant comportant un comparateur de découpage de courant, **en ce que** l'injection du courant de maintien s'effectue par commande de découpage de courant d'un raccord (A0, A1, B0, B1, P1, P2, P3) du premier enroulement (A, B, S12, S23, S31), **en ce que** dans le raccord (A0, A1, B0, B1, P1, P2, P3) du premier enroulement (A, B, S12, S23, S31) est injecté un courant augmentant avec le début d'un intervalle d'horloge de la commande de découpage de courant jusqu'à une valeur prédéfinie et diminuant ensuite jusqu'à la fin de l'intervalle d'horloge et **en ce que** la période de découpage, depuis le début de l'intervalle d'horloge jusqu'à l'instant à l'intérieur de l'intervalle d'horloge auquel le courant atteint la valeur prédéfinie, est utilisée comme paramètre d'inductance moteur.

7. Dispositif de production d'un couple de maintien dans l'état arrêté d'un moteur électrique à commutation électrique et comportant au moins deux enroulements (A, B, S12, S23, S31), sur lequel opère de l'extérieur dans l'état arrêté un couple de charge éventuellement variable, doté
- d'une unité de production de courant de maintien (34) destinée à l'injection d'un courant de maintien dans un raccord (A0, A1, B0, B1, P1, P2, P3) d'un premier enroulement (A, B, S12, S23, S31),
- d'une unité de collecte d'inductance moteur destinée à la collecte d'un paramètre d'inductance moteur représentant la valeur de l'inductance moteur à l'arrêt du moteur électrique (10),
- d'un régulateur destiné à la régulation du courant de maintien à l'arrêt du moteur électrique (10) à fins de compensation d'un couple de charge éventuellement variable opérant de l'extérieur sur le moteur électrique (10), dans lequel est apportée au régulateur (28) comme déviation de réglage la différence d'une valeur de consigne du paramètre d'inductance moteur comme grandeur de référence et d'une valeur réelle du paramètre d'inductance moteur comme grandeur de rétroaction, dans lequel la valeur réelle du paramètre d'inductance moteur est la valeur qui se produit sur la base de la grandeur du courant de maintien injecté à l'arrêt et de la grandeur du couple de charge opérant sur le moteur électrique (10), et dans lequel le régulateur délivre comme grandeur de commande un signal à l'unité de production de courant de maintien (34), et
- d'une unité de commande (36) pour
- la commande de l'unité de production de courant de maintien (34) à l'arrêt du moteur électrique (10) pour injecter un courant de maintien maximal,
- la commande de l'unité de collecte d'inductance moteur à fins de saisie du paramètre d'inductance moteur lors de l'alimentation du moteur électrique (10) avec le courant de maintien maximal,
- la commutation entre un premier mode de fonctionnement, où une commande de l'unité de production de courant de maintien (34) est effectuée par l'unité de commande (36), et un deuxième mode de fonctionnement, où la commande de l'unité de production de courant de maintien (34) est effectuée par le régulateur,
- la commande de l'unité de production de courant de maintien (34) pour injecter un courant de maintien se réduisant progressivement à partir du courant de maintien maximal afin de provoquer une déviation de réglage à l'entrée du régulateur (28) supérieure à une valeur seuil prédéfinissable, dans lequel cette commande de l'unité de production de courant de maintien (34) prend fin au plus tard lorsque le courant de maintien s'est réduit jusqu'à une valeur minimum prédéfinissable, **caractérisé en ce que** l'unité de commande (36) est disposée pour
- l'activation de la fonction du régulateur (28) afin de basculer la commande de l'unité de production de courant de maintien (34) de l'unité de commande (36) au régulateur (28), lorsque pendant la réduction progressive du courant de maintien la déviation de réglage est supérieure à la valeur seuil, à savoir à fins de régulation de l'inductance moteur sur la grandeur de la valeur de sortie de réglage du paramètre d'inductance moteur donnée lors de l'activation de la fonction du régulateur (28).

8. Dispositif selon la revendication 7, **caractérisé par** une unité de production de courant de test (32) destinée à produire des impulsions de test injectables dans un autre enroulement que le premier (A, B, S12, S23, S31) pendant l'arrêt du moteur électrique (10), dans lequel l'unité de saisie d'inductance moteur saisit comme paramètre d'inductance moteur la période de recirculation résultant de l'injection d'une impulsion de test.

9. Dispositif selon la revendication 8, **caractérisé par** un circuit pilote doté d'étages finaux pilotes (12, 14, 16, 18) associés aux raccords d'enroulement (A0, A1, B0, B1, P1, P2, P3) du moteur électrique (10), et un détecteur de courant de décharge (27), lequel est associé à un raccord (A0, A1, B0, B1, P1, P2, P3) de l'enroulement (A, B, S12, S23, S31) du moteur électrique (10) à travers lequel les impulsions de test sont injectables, dans lequel une période de recirculation est déterminable à l'aide du signal de sortie du détecteur de courant de décharge (27).

10. Dispositif selon la revendication 9, **caractérisé en ce que** le détecteur de courant de décharge (27) produit un signal de sortie lorsque la valeur du courant de test a diminué jusqu'en-dessous de la valeur minimum prédéfinissable.

11. Dispositif selon la revendication 9, **caractérisé en ce que** lors de la réalisation du moteur électrique (10) en tant que moteur pas-à-pas unipolaire, un circuit de fixation de niveau (38) par étage final pilote (12, 14, 16, 18) est prévu, afin de limiter à une valeur prédéfinie la tension aux bornes du raccord d'enroulement (A0, A1, B0, B1, P1, P2, P3) du moteur électrique (10) à travers lequel les impulsions de test sont injectables, dans lequel le détecteur de courant de décharge (27) fournit un signal de sortie lors d'une réduction jusqu'en-dessous de la valeur prédéfinie.

12. Dispositif selon la revendication 7, caractérisé en ce l'unité de production de courant de maintien (34) comporte un circuit de découpage de courant pour la commande de découpage de courant d'un raccord (A0, A1, B0, B1, P1, P2, P3) du premier enroulement (A, B, S12, S23, S31), en ce que dans le raccord (A0, A1, B0, B1, P1, P2, P3) du premier enroulement (A, B, S12, S23, S31) est injectable un courant augmentant avec le début d'un intervalle d'horloge de la commande de découpage de courant jusqu'à une valeur prédéfinie et diminuant ensuite jusqu'à la fin de l'intervalle d'horloge et en ce que la période de découpage, depuis le début de l'intervalle d'horloge jusqu'à l'instant à l'intérieur de l'intervalle d'horloge auquel le courant atteint la valeur prédéfinie, est le paramètre d'inductance moteur représentant l'inductance moteur.
